# EUROPÄISCHE PATENTSCHRIFT

(11) **EP 2 619 608 B1**
(45) Veröffentlichungstag und Bekanntmachung des Hinweises auf die Patenterteilung: **06.09.2017**
(21) Anmeldenummer: 11754387.6
(22) Anmeldetag: 07.09.2011
(51) Int. Cl.: G01S 19/35, B60R 11/02, G01S 19/45

(54) **STANDORTBESTIMMUNGSEINRICHTUNG IN EINEM KRAFTFAHRZEUG UND INFORMATIONSFUSIONSVERFAHREN**
LOCATION-DETERMINING DEVICE IN A MOTOR VEHICLE AND INFORMATION MERGING METHOD
DISPOSITIF DE LOCALISATION EMBARQUÉ DANS UN VÉHICULE À MOTEUR ET PROCÉDÉ DE FUSION DES INFORMATIONS

(30) Priorität: 23.09.2010 DE 102010041265
(43) Veröffentlichungstag der Anmeldung: 31.07.2013
(73) Patentinhaber: Continental Teves AG & Co. oHG, 60488 Frankfurt (DE)
(72) Erfinder: STÄHLIN, Ulrich, 65670 Eschborn (DE)
(74) Vertreter: Wagner, Philipp
(86) Internationale Anmeldenummer: PCT/EP2011/065428
(87) Internationale Veröffentlichungsnummer: WO 2012/038250

(56) Entgegenhaltungen:
- WO-A1-2009/074654
- US-A1- 2004 196 179
- US-A1- 2010 103 040
- US-A1- 2010 176 987

## Beschreibung

Die Erfindung betrifft eine Standortbestimmungseinrichtung gemäß Anspruch 1 und ein Informationsfusionsverfahren gemäß Anspruch 9.

Aus dem Stand der Technik ist eine Vielzahl an unterschiedlichen Mono- und Stereokamerasystemen für die Verwendung als Umfeldsensoren in Kraftfahrzeuganwendungen bekannt. Aufgrund der vielfältigen neuen Möglichkeiten, die derartige Kamerasysteme im Zusammenhang mit Fahrerassistenzsystemen bieten, gewinnen diese zunehmend an Verbreitung. Dabei eignen sich Stereokamerasysteme nicht nur zur Objekterkennung, sondern zusätzlich auch zur Entfernungsbestimmung. Ebenso sind auch Navigationssysteme, welche in der Regel GPS-basierend ausgeführt sind, in immer mehr aktuellen Fahrzeugen serienmäßig vorhanden. Diese Navigationssysteme nehmen anhand von empfangenen Satellitensignalen eine Standortbestimmung vor und führen den Fahrer entlang einer mithilfe einer digitalen Karte bestimmten Fahrtroute ans Ziel. Je mehr Satellitensignale das Navigationssystem von einer möglichst großen Zahl von Satelliten empfängt und je deutlicher diese Signale empfangen werden, desto exakter kann dabei die Standortbestimmung durchgeführt werden.

Kamerasysteme werden in der Regel im Inneren des Fahrgastraums angeordnet, wie z.B. in der DE 10 2008 061 749 A1 offenbart. Das dort beschriebene Kamerasystem ist vor der Windschutzscheibe an einer oberen Querverbindung der A-Säulen montiert. Hier liegen aufgrund des in Fahrtrichtung nahezu uneingeschränkten Blickfelds gute Voraussetzungen für eine optische Umfelderkennung vor. Gleichzeitig wird die Sicht der Fahrzeuginsassen durch die Windschutzscheibe nicht oder nur wenig eingeschränkt. Zur Vermeidung von ungewünschter Lichteinstrahlung, welche von außerhalb eines zu überwachenden Bereichs in die Kamerasensorik trifft, werden die Kamerasysteme gemäß dem Stand der Technik zudem mit einem sog. Streulichtschutz umgeben.

In der DE 10 2008 020 446 A1 ist eine Korrekturvorrichtung zur Korrektur einer intern berechneten Fahrzeugposition beschrieben. Mittels eines Kamerasensors oder mittels ESP-Sensorik wird eine erste Position, die mit einem markanten Punkt auf der Fahrtroute des Fahrzeugs korrespondiert, erkannt und die zugehörige Position aus einer Speichereinheit ausgelesen. Die Korrekturvorrichtung umfasst weiterhin eine Positionsbestimmungseinheit, z.B. auf Basis von GPS, zur Bestimmung einer zweiten Position des Fahrzeugs. Die ermittelte zweite Position kann dann anhand der ermittelten ersten Position korrigiert werden.

Die US 2010/0103040 A1 beschreibt ein Verfahren zur Verwendung von Verkehrszeichen zum Erweitern von GPS-Koordinatendaten, um die gegenwärtige Position eines Navigationsgeräts zu berechnen. Dabei werden zunächst die GPS-Koordinatendaten vom Navigationsgerät empfangen. Weiterhin wird mittels einer vom Navigationsgerät umfassten Kamera ein Bild erfasst, welches die Umgebung des Navigationsgeräts zeigt. Durch geeignete Bildverarbeitung werden Verkehrszeichen im Bild erkannt, deren bekannte Position nun dazu genutzt wird, um die GPS-Koordinatendaten dahingehend zu erweitern, dass die aktuelle Position des Navigationsgeräts präziser bestimmt werden kann.

In der WO 2000/074654 A1 wird ein Verfahren zum Berechnen von Navigationsinformationen in einem tragbaren Gerät offenbart, umfassend einen GNSS-Empfänger zum Empfangen von Navigationssignalen von einer Vielzahl von Navigationssatelliten. Weiterhin umfasst das Gerät auch einen GNSS-Prozessor, um GNSS- Positionsinformationen aus den Navigationssignalen zu extrahieren. Der GNSS-Empfänger ist auch dazu ausgelegt, Bilddaten von einem Kameramodul zu erhalten. Das Verfahren der WO 2000/074654 A1 umfasst dabei die folgenden Schritte: Ableiten eines Satzes von Positionsinformationen von dem Kameramodul, Bereitstellen der gewonnenen Positionsinformationen an einen Navigationsprozessor, Verwenden der Positionsinformationen und der Navigationssignale um eine Positionskorrektur für den GNSS-Empfänger zu erzeugen und Verarbeiten von Navigationsinformationen basierend auf der Positionskorrektur.

Die US 2010/0176987 A1 beschreibt ein Verfahren zum Schätzen einer Position einer Plattform mit hoher Genauigkeit. Dabei wird zunächst ein von Sattelliten ausgesendetes GPS-Signal empfangen und verarbeitet, um Positionsschätzinformationen zu erzeugen. Weiterhin werden mittels einer Kamera, welche auf der Plattform angeordnet ist, Bildinformationen der Umgebung erfasst. Mittels eines Bilderkennungsverfahrens werden nun Eigenschaften und besondere Merkmale von Orientierungspunkten aus den Bildinformationen extrahiert. Diese Eigenschaften und besonderen Merkmale werden anschließend an eine Datenbank übertragen, wodurch die Datenbank aktualisiert und ergänzt wird. Durch Einbeziehen der Eigenschaften und besonderen Merkmale in die erzeugten Positionsschätzinformationen wird schließlich die Genauigkeit der Positionsschätzung verbessert.

Aus der US 2004/0196179 A1 ist eine Rückspiegelvorrichtung bekannt, die eine Befestigungsstruktur und ein Tri-Band-Antennenmodul umfasst. Die Befestigungsstruktur ist dazu ausgelegt, an einem leitfähigen Befestigungsknopf befestigt zu werden, wobei der Befestigungsknopf an der Innenseite eine Fahrzeugwindschutzscheibe angeordnet ist. Das Tri-Band-Antennenmodul weist eine Patch-Antenne und eine Dual-Band-Mobilfunkantenne auf. Außerdem ist es derart angeordnet, dass es an den leitfähigen Befestigungsknopf angrenzt. Weiterhin kann die Rückspiegelvorrichtung auch eine Einhausung für eine Kamera aufweisen.

Im Zuge einer stetigen Verbesserung der Informationserfassung, der Informationsverarbeitung und damit auch der Zuverlässigkeit der Informationen findet im Kraftfahrzeugbereich eine zunehmende Fusion der einzelnen Sensorinformationen statt. In diesem Zusammenhang offenbart die DE 10 2007 058 192 A1 ein zentrales Steuergerät für mehrere in einem Kraftfahrzeug vorgesehene Assistenzsysteme, die zumindest teilweise mit Umfeldsensoren ausgestattet sind. Das zentrale Steuergerät ist auf Datenebene mit den einzelnen Assistenzsystemen verbunden und überprüft die Informationen eines Umfeldsensors mittels der Informationen anderer Umfeldsensoren. Z.B. kann die Bildinformation einer Kamera die Abstandsmessung eines Radarsensors bestätigen. Einzelne Sensorinformationen können somit plausibilisiert werden und liegen redundant vor. Eine derartige Kopplung von Einzelsignalen verschiedener Sensoren ist als Sensorfusion bekannt.

Die aus dem Stand der Technik bekannten, satellitengestützten Standortbestimmungseinrichtungen für Fahrzeuganwendungen sind zunächst bereits aufgrund der bekannten Anbringungsorte für die Empfangsvorrichtung der Sattelitensignale nachteilbehaftet. Gemäß dem Stand der Technik sind die Empfangsvorrichtungen entweder im Armaturenbrett, auf dem Dach, in der Heckklappe oder in den Seitenspiegeln des Fahrzeugs angeordnet. In erstgenanntem Fall wird der Ausbreitungspfad des Signals vom Satelliten zur Empfangsvorrichtung durch das Fahrzeugdach gestört, was eine verminderte Empfangsqualität und damit eine verminderte Standortgenauigkeit zur Folge hat. In den drei letztgenannten Fällen steht zwar eine verbesserte Empfangsqualität zur Verfügung, dies ist jedoch mit erhöhtem Einbauaufwand und ebenso erhöhtem Kostenaufwand verbunden. Hinzu kommen weiterer Einbau- und Kostenaufwand, sofern die Standortbestimmungseinrichtung im Rahmen einer zunehmend üblichen Sensorfusion mit weiteren Fahrzeugsensoren gekoppelt werden soll.

Die Aufgabe der Erfindung ist es daher, eine Standortbestimmungseinrichtung vorzuschlagen, welche einen vergleichsweise geringen Einbauaufwand mit einer vergleichsweise guten Empfangsqualität der Satellitensignale verbindet und dabei ohne weiteren Einbauaufwand in der Lage ist, die ermittelten Standortinformationen im Rahmen einer Sensorfusion mit Informationen mindestens eines weiteren Sensors zu koppeln.

Diese Aufgabe wird erfindungsgemäß durch die Standortbestimmungseinrichtung gemäß Anspruch 1 und das Informationsfusionsverfahren gemäß Anspruch 9 gelöst.

Die erfindungsgemäße Standortbestimmungseinrichtung in einem Kraftfahrzeug umfasst mindestens eine Empfangsvorrichtung zum Empfang von Positions- und Zeitsignalen einer Vielzahl von einem globalen Navigationssystem zugeordneten Satelliten und ein Standorterrechnungsmodul zum Errechnen von Standortinformationen anhand von empfangenen Positions- und Zeitdaten. Die Standortbestimmungseinrichtung zeichnet sich dadurch aus, dass die mindestens eine Empfangsvorrichtung baulich in die Einhausung einer optischen Sensoreinheit integriert ist, wobei die Einhausung in einem Fahrgastraum in einem Bereich einer oberen Begrenzung einer Windschutzscheibe angeordnet ist und wobei die Einhausung nicht mehr als eine einzelne Anbindung an jede vorhandene Fahrzeugdatenbusgattung und nicht mehr als eine einzelne Anbindung an eine Fahrzeugenergieversorgung aufweist. Durch die Integration der Empfangsvorrichtung in die Einhausung der optischen Sensoreinheit ergibt sich zunächst der Vorteil eines im Vergleich geringeren Einbauaufwands gegenüber dem getrennten und jeweils einzelnen Einbau der optischen Sensoreinheit, der Empfangsvorrichtung und des Standorterrechnungsmoduls in ein Fahrzeug. Gleichzeitig werden die Kosten für den Einbau reduziert. Besonders im Hinblick darauf, dass die optische Sensoreinheit und die Standortbestimmungseinrichtung über eine gemeinsame Anbindung an die Fahrzeugenergieversorgung verfügen und über eine gemeinsame Anbindung an den Fahrzeugdatenbus kommunizieren, ergibt sich eine Vereinfachung und Vergünstigung beim Einbau in das Fahrzeug. Sofern im Fahrzeug unterschiedliche Fahrzeugbusgattungen vorhanden sind, z.B. Flexray und CAN, kann erfindungsgemäß auch eine einzelne Anbindung an jede Fahrzeugdatenbusgattung vorgesehen sein. Ein weiterer Vorteil, der v.a. die Zuverlässigkeit und Genauigkeit der Standortbestimmungseinrichtung verbessert, ist die Anordnung der Einhausung im Bereich einer oberen Begrenzung der Windschutzscheibe, beispielsweise in der Nähe des Rückspiegels. Dort herrschen sowohl für die optische Sensoreinheit vergleichsweise gute Erfassungsbedingungen eines üblicherweise zu überwachenden Bereichs als auch für die Standortbestimmungseinrichtung vergleichsweise gute Empfangsbedingungen. Besonders angesichts der Entwicklung zu immer flacheren Windschutzscheiben zur Reduzierung des Luftwiderstands und den damit einhergehenden, größeren möglichen Empfangswinkeln der zur Standorterrechnung benötigten Positions- und Zeitsignale der dem globalen Navigationssystem zugeordneten Satelliten ist dies von Vorteil.

Bevorzugt ist es vorgesehen, dass zusätzlich das Standorterrechnungsmodul baulich in die Einhausung integriert ist. Daraus ergibt sich der weitere Vorteil, dass auch für das Standorterrechnungsmodul weder eine gesonderte Anbindung an die Fahrzeugenergieversorgung noch eine gesonderte Anbindung an den Fahrzeugdatenbus notwendig ist. Dies reduziert sowohl den Einbauaufwand als auch den Kostenaufwand weiter. Zudem werden die Voraussetzungen zu einer vergleichsweise leicht zu bewerkstelligenden Informationsfusion der optischen Sensoreinheit und der Standortbestimmungseinrichtung geschaffen, da somit auch das Standorterrechnungsmodul baulich in der Einhausung der optischen Sensoreinheit angeordnet ist. Zusätzlicher Aufwand zur Datenübertragung zwischen der optischen Sensoreinheit und dem die Standortinformationen errechnenden Standorterrechnungsmodul, wie etwa Kabel oder gesonderte Busanbindungen, werden nicht benötigt.

Besonders bevorzugt ist es vorgesehen, dass das Standorterrechnungsmodul mit einem Bildverarbeitungsmodul der optischen Sensoreinheit auf Datenebene gekoppelt ist, wobei insbesondere das Standorterrechnungsmodul und das Bildverarbeitungsmodul zu einem gemeinsamen elektronischen Rechenmodul fusioniert sind. Die Kopplung auf Datenebene ermöglicht einen Informationsaustausch und eine Informationsfusion des Standorterrechnungsmoduls und des Bildverarbeitungsmoduls. Sofern das Standorterrechnungsmodul und das Bildverarbeitungsmodul sogar zu einem gemeinsamen elektronischen Rechenmodul fusioniert sind, ist die Informationsfusion besonders effektiv, da alle Informationen vom selben Rechenmodul verarbeitet werden und somit kein Informationsaustausch zwischen unterschiedlichen Rechenmodulen zur Informationsfusion notwendig ist. Dies verbessert zum Einen die Signalverarbeitung des optischen Sensors, da für eine zuverlässige Verarbeitung der erfassten Bilder die vom Fahrzeug zurückgelegte Wegstrecke zwischen zwei Bilderfassungsvorgängen berücksichtigt werden muss. Die zurückgelegte Wegstrecke lässt sich wiederum aus der zeitlichen Ableitung der Standortinformationen der Standortbestimmungseinrichtung entnehmen. Zusätzlich können Informationen über die zurückgelegt Wegstrecke auch aus den Fahrdynamiksensoren entnommen werden, diese müssen jedoch erst über den Fahrzeugdatenbus übermittelt werden. Zum Anderen können die von der Standortbestimmungseinrichtung erfassten Informationen mittels der Informationen der optischen Sensoreinheit validiert werden. Dies erlaubt beispielsweise das einfache Erkennen und Eliminieren von kurzfristigen Messfehlern oder Störungen der Standortbestimmungseinrichtung. Zusätzlich können über die Kamera auch die Umgebungsbedingungen erkannt werden und die Auswertung der Positions- und Zeitsignale der Satelliten kann an diese Bedingungen angepasst werden. So können beispielsweise Straßenschluchten erkannt werden, in denen die Anzahl der empfangbaren Satelliten im Vergleich zu einer Überlandfahrt stark verringert ist.

Vorzugsweise zeichnet sich die Einrichtung dadurch aus, dass die optische Sensoreinheit ein an sich bekanntes Mono- oder Stereokameramodul oder ein Laserscanner ist und insbesondere Bestandteil eines an sich bekannten Fahrerassistenzsystems ist. Die Verwendung derartiger Mono- oder Stereokameramodule ist seit langem bekannt und Mono- oder Stereokameramodule sind im Rahmen verschiedener Fahrerassistenzsysteme in vielen Fahrzeugen serienmäßig vorhanden. Damit entfällt zusätzlicher Einbau- und Kostenaufwand, da für die erfindungsgemäße Standortbestimmungseinrichtung auf eine ohnehin vorhandene optische Sensoreinheit zurückgegriffen werden kann. Üblicherweise werden Mono- oder Stereokameramodule zur Objekterkennung sowie - zumindest im Falle eines Stereokameramoduls - zur Entfernungsmessung verwendet.

Gemäß einer weiteren bevorzugten Ausführungsform der Erfindung ist es vorgesehen, dass die Standortbestimmungseinrichtung ein GPS-Modul, Galileo-Modul, GLONASS-Modul, Compass-Modul oder SBAS-Modul ist. Die genannten Module unterscheiden sich in erster Linie durch die zum Senden der Positions-und Zeitsignale verwendeten Frequenzbereiche voneinander und sind unabhängig von ihren jeweiligen Besonderheiten gleichermaßen als Standortbestimmungseinrichtung im Sinne der Erfindung verwendbar.

Zweckmäßigerweise ist es vorgesehen, dass die Windschutzscheibe im Bereich der optischen Sensoreinheit nicht metallisiert ist und insbesondere im Bereich der Empfangsvorrichtung nicht metallisiert ist. Daraus ergibt sich zunächst der Vorteil einer verbesserten Erfassungsfähigkeit der optischen Sensoreinheit. Sofern die Windschutzscheibe auch im Bereich der Empfangsvorrichtung nicht metallisiert ist, wird zusätzlich der Empfang der von den dem globalen Navigationssystem zugeordneten Satelliten gesendeten Positions- und Zeitsignale verbessert. Andernfalls würde stets ein Anteil der gesendeten Positions- und Zeitsignale durch die Metallisierung absorbiert oder reflektiert.

Außerdem ist es vorteilhaft, dass die optische Sensoreinheit über mindestens einen Streulichtschutz verfügt und insbesondere die mindestens eine Empfangsvorrichtung baulich in den Streulichtschutz integriert ist. Der Streulichtschutz verhindert den Einfall unerwünschter Lichteinstrahlung auf die optische Sensoreinheit, wie z.B. direkter Sonneneinstrahlung oder von außerhalb des zu überwachenden Bereichs einfallender Strahlen. Durch die bauliche Integration der Empfangsvorrichtung in den Streulichtschutz werden zum Einen die Empfangscharakteristiken der Empfangsvorrichtung weiter verbessert, da sie nicht durch den Streulichtschutz verdeckt wird. Zum Anderen wird der Erfassungsbereich der optischen Sensoreinheit nicht durch die Empfangsvorrichtung verringert, da diese durch ihre Integration in den Streulichtschutz nur diejenigen Bereiche ausblendet, deren Erfassung ohnehin unerwünscht ist. Bei einer Verwendung einer Stereokamera als optische Sensoreinheit ist eine Integration in jeden der beiden Streulichtschütze ohne Einschränkung möglich.

Weiterhin ist es zweckmäßig, dass die mindestens eine Empfangsvorrichtung in einen Verbindungsstrang von zwei das Stereokameramodul bildenden Monokameramodulen baulich integriert ist. Abhängig von der individuellen Bauform des Stereokameramoduls kann eine Integration in den Verbindungsstrang gegenüber anderen Anbringungsorten mit besseren Empfangscharakteristiken der Empfangsvorrichtung verbunden sein. Zudem können sich Vereinfachungen bei der Produktion ergeben.

Die vorliegende Erfindung betrifft weiter ein Informationsfusionsverfahren für eine Standortbestimmungseinrichtung in einem Kraftfahrzeug, bei welchem mittels mindestens einer Empfangsvorrichtung Positions- und Zeitsignale von einer Vielzahl von einem globalen Navigationssystem zugeordneten Satelliten empfangen werden und wobei Standortinformationen anhand von empfangenen Positions- und Zeitdaten mittels eines Standorterrechnungsalgorithmus errechnet werden. Weiterhin werden Bildinformationen und/oder Abstandsinformationen mittels einer optischen Sensoreinheit erfasst und mittels eines Bildverarbeitungsalgorithmus verarbeitet. Das erfindungsgemäße Verfahren zeichnet sich dadurch aus, dass zumindest die mindestens eine Empfangsvorrichtung und die optische Sensoreinheit mittels einer gemeinsamen Anbindung an einen Fahrzeugdatenbus und einer gemeinsamen Anbindung an eine Fahrzeugenergieversorgung angeschlossen sind. Das erfindungsgemäße Verfahren ist somit zur Durchführung in einer erfindungsgemäßen Standortbestimmungseinrichtung ausgelegt und führt zu den im Zusammenhang mit der Standortbestimmungseinrichtung bereits beschriebenen Vorteilen.

Bevorzugt ist es vorgesehen, dass zusätzlich ein Standorterrechnungsmodul der Standortbestimmungseinrichtung, welches den Standorterrechnungsalgorithmus ausführt, mittels der gemeinsamen Anbindung an den Fahrzeugdatenbus und der gemeinsamen Anbindung an die Fahrzeugenergieversorgung angeschlossen ist. Dadurch wird das erfindungsgemäße Verfahren vereinfacht und beschleunigt, da alle Elemente der Standortbestimmungseinrichtung und alle Elemente der optischen Sensoreinheit aufgrund der gemeinsamen Anbindungen eng miteinander verkoppelt sind, was einen schnellen und effektiven Informationsaustausch begünstigt.

Besonders bevorzugt ist es vorgesehen, dass der Bildverarbeitungsalgorithmus und der Standorterrechnungsalgorithmus von einem gemeinsamen elektronischen Rechenmodul ausgeführt werden, wobei insbesondere das Standorterrechnungsmodul und ein Bildverarbeitungsmodul der optischen Sensoreinheit, welches den Bildverarbeitungsalgorithmus ausführt, zu dem gemeinsamen elektronischen Rechenmodul fusioniert sind. Die Verwendung eines gemeinsamen elektronischen Rechenmoduls zum Ausführen sowohl des Standorterrechnungsalgorithmus als auch des Bildverarbeitungsalgorithmus vereinfacht und beschleunigt das erfindungsgemäße Verfahren weiter, da alle Informationen vom selben elektronischen Rechenwerk verarbeitet werden. Ein Informationsaustausch zwischen unterschiedlichen Rechenwerken, welcher stets mit dem Aufwand von Rechenzeit und Rechenleistung verbunden ist, wird daher nicht benötigt.

Weiterhin ist es vorteilhaft, dass vom Standorterrechnungsalgorithmus errechnete Standortinformationen, insbesondere zeitliche Ableitungen davon, zur Verbesserung einer Verarbeitung der Bildinformationen mittels des Bildverarbeitungsalgorithmus verwendet werden. Mittels der Information über die zwischen zwei Bilderfassungsvorgängen zurückgelegte Wegstrecke des Fahrzeugs wird die Bildverarbeitung verbessert. Somit können Objekte sicherer erkannt und genauere Informationen aus der Verarbeitung der Bildinformationen erlangt werden.

Insbesondere ist es vorteilhaft, dass zusätzlich Fahrdynamiksensorinformationen zur Verbesserung einer Verarbeitung der Bildinformationen mittels des Bildverarbeitungsalgorithmus verwendet werden. Auch aus den Fahrdynamiksensorinformationen lassen sich Informationen über die zwischen zwei Bilderfassungsvorgängen zurückgelegte Wegstrecke des Fahrzeugs ermitteln. Diese Informationen können die Informationen des Standorterrechnungsalgorithmus ergänzen und korrigieren, was zu einer weiteren Verbesserung bei der Verarbeitung der Bildinformationen führt.

Zweckmäßigerweise ist es vorgesehen, dass die Standortinformationen mittels verarbeiteten Bildinformationen validiert und/oder korrigiert werden. Dadurch ergibt sich der Vorteil, dass die Zuverlässigkeit der Standortinformationen verbessert werden kann. Beispielsweise ist es möglich, mittels der Bildinformationen zu erkennen, ob sich das Fahrzeug an einer Kreuzung befindet, unter einen Brücke hindurchfährt oder sich in einem Tunnel befindet. Somit können Standortinformtionen des Standorterrechnungsalgorithmus auf einfache Weise validiert bzw. korrigiert werden.

Gemäß einer weiteren bevorzugten Ausführungsform der Erfindung ist es vorgesehen, dass die verarbeiteten Bildinformationen zur Bestimmung vorherrschender Empfangsbedingungen der Positions- und Zeitsignale verwendet werden und insbesondere eine Verarbeitung der Positions- und Zeitsignale an die vorherrschenden Empfangsbedingungen angepasst wird. Dies ermöglicht eine stets situationsgerechte und weitestgehend optimal angepasste Verarbeitung der empfangenen Positions-und Zeitsignale durch den Standorterrechnungsalgorithmus. So erlauben die Bildinformationen etwa eine Erkennung, ob sich das Fahrzeug in einer Straßenschlucht einer dicht bebauten Siedlung befindet und der Signalweg zu einer bestimmten Anzahl von dem globalen Navigationssystem zugeordneten Satelliten durch Gebäude unterbrochen ist. Ebenso kann erkannt werden, ob sich das Fahrzeug auf einer von oben frei einsehbaren Straße befindet und keine Unterbrechungen der Signalwege von einzelnen Satelliten vorliegen. Die Anpassung der Verarbeitung der empfangenen Positions- und Zeitsignale ermöglicht eine Standortbestimmung mit vergleichsweise größerer Genauigkeit und Zuverlässigkeit.

Weitere bevorzugte Ausführungsformen ergeben sich aus den Unteransprüchen und der nachfolgenden Beschreibung eines Ausführungsbeispiels an Hand von Figuren.

Es zeigt
- Fig. 1: die schematische Darstellung einer erfindungsgemä-ßen Standortbestimmungseinrichtung,
- Fig. 2: ein Fahrzeug, welches in einen Tunnel einfährt und mit der erfindungsgemäßen Standortbestimmungseinrichtung ausgestattet ist und
- Fig. 3: einen beispielhaften Ablauf des erfindungsgemäßen Verfahrens in Form eines Flussdiagramms.

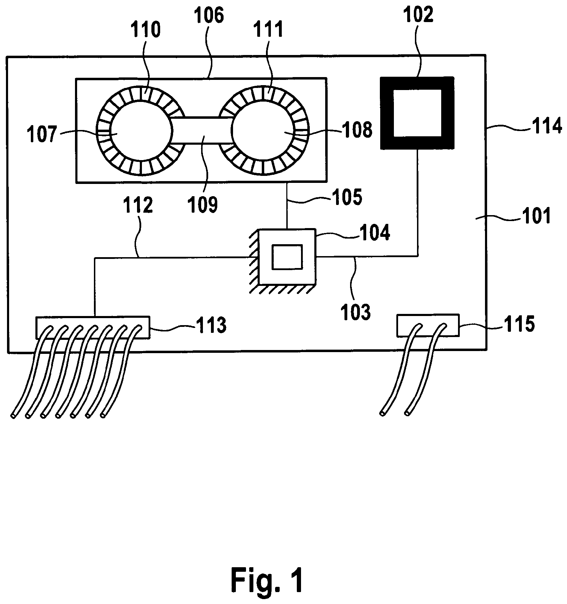

Fig. 1 zeigt schematisch eine mögliche Ausführungsform einer erfindungsgemäßen Standortbestimmungseinrichtung 101. Standortbestimmungseinrichtung 101 umfasst Empfangsvorrichtung 102, welche zum Empfang von Positions- und Zeitsignalen einer Vielzahl von einem globalen Navigationssystem zugeordneten Satelliten ausgelegt ist. Beispielsgemäß handelt es sich bei Empfangsvorrichtung 102 um eine GPS-Antenne. Über Datenleitung 103 ist Empfangsvorrichtung 102 mit elektronischem Rechenwerk 104 verbunden. Elektronisches Rechenwerk 104 stellt ein fusioniertes Standorterrechnungsmodul und Bildverarbeitungsmodul dar. Entsprechend führt elektronisches Rechenwerk 104 sowohl einen Standorterrechnungsalgorithmus als auch einen Bildverarbeitungsalgorithmus aus. Dadurch stehen die Bildinformationen sofort zur Verwendung im Standorterrechnungsalgorithmus zur Verfügung und umgekehrt können Standortinformationen sofort dem Bildverarbeitungsalgorithmus zur Verfügung gestellt werden. Insbesondere die Fahrzeuggeschwindigkeit bzw. die vom Fahrzeug zurückgelegte Wegstrecke zwischen zwei Bilderfassungsvorgängen von Stereokameramodul 106 ist eine zur Bildverarbeitung wesentliche Information. Über Datenleitung 105 ist elektronische Rechenwerk 104 außerdem mit Stereokameramodul 106 verbunden. Stereokameramodul 106 besteht aus zwei einzelnen Monokameramodulen 107 und 108, welche durch Steg 109 baulich verbunden sind. Da es sich um ein Stereokameramodul handelt, können nicht nur allgemein optische Informationen erfasst, sondern auch Entfernungen bestimmt werden. Um unerwünschte Lichteinstrahlung in Monokameramodule 107 und 108 zu vermeiden, sind diese mit Streulichtschützen 110 und 111 versehen. Weiterhin ist elektronisches Rechenwerk 104 über Datenleitung 112 mit Anbindung 113 an einen Fahrzeugdatenbus (nicht dargestellt) verbunden. Da alle beschriebenen Komponenten in Einhausung 114 des Stereokameramoduls integriert sind, wird nur eine gemeinsame Anbindung 113 an den Fahrzeugdatenbus für alle Komponenten benötigt. Ebenfalls wird für alle Komponenten nur eine gemeinsame Anbindung 115 an die Fahrzeugenergieversorgung benötigt. Die einzelnen Energieversorgungsbahnen der von Einhausung 114 eingefassten Elemente sind der Übersichtlichkeit wegen nicht dargestellt. Über den Fahrzeugdatenbus können die Bildinformationen und die Standortinformationen übertragen werden und verschiedenen Fahrzeugsystemen und Assistenzeinrichtungen zur Verfügung gestellt werden. In diesem Ausführungsbeispiel werden die Bildinformationen und die Standortinformationen jeweils einem ADAS-Horizont, einem Navigationssystem und einem Baustellenassistenten zur Verfügung gestellt. Außerdem werden über den Fahrzeugdatenbus Fahrdynamiksensorinformationen an elektronisches Rechenwerk 104 übertragen, welche von diesem zusätzlich zu den Standortinformationen des Standorterrechnungsalgorithmus zur Verbesserung der Verarbeitung der Bildinformationen durch den Bildverarbeitungsalgorithmus verwendet werden. Einhausung 114 ist an der Innenseite der Fahrzeugwindschutzscheibe auf Höhe des Rückspiegels angeordnet. Dadurch ergibt sich für Stereokameramodul 106 ein weitestgehend optimales Sichtfeld nach vorne. Zusätzlich ergeben sich daraus vergleichsweise sehr gute Empfangsbedingungen für Empfangsvorrichtung 102, da hier in der Regel ein ununterbrochener Signalweg zu den Satelliten des globalen Navigationssystems vorliegt. In der Summe führt die Integration von Stereokameramodul 106, Empfangsvorrichtung 102 und gemeinsamem elektronischen Rechenwerk 104 in Einhausung 114 somit zu verbesserten Empfangsbedingungen für Empfangsvorrichtung 102, zu mittels Datenfusion von Stereokameramodul 106 und Empfangsvorrichtung 102 verbesserter Bildverarbeitung und einer verbesserten Standortbestimmung. Schließlich reduzieren sich der Einbauaufwand und der Kostenaufwand, da eine gemeinsame Anbindung 113 an den Fahrzeugdatenbus und eine gemeinsame Anbindung 115 an die Fahrzeugenergieversorgung für alle von Einhausung 114 eingefassten Elemente genutzt werden können.

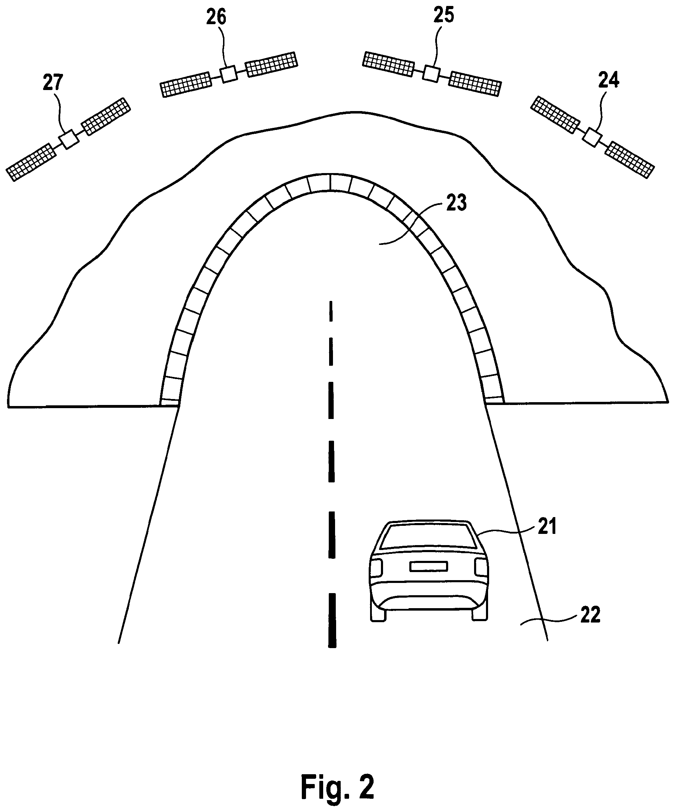

Fig. 2 zeigt Fahrzeug 21, welches mit einer erfindungsgemäßen Standortbestimmungseinrichtung (nicht dargestellt) ausgestattet ist. Fahrzeug 21 fährt auf Straße 22 in Richtung von Tunnel 23. Solange sich Fahrzeug 21 auf Straße 22 noch vor Tunnel 23 befindet, empfängt die in Fahrzeug 21 vorhandene Standortbestimmungseinrichtung die von Satelliten 24, 25, 26 und 27 ausgesendeten Positions- und Zeitsignale in guter Qualität. Das in Fahrzeug 21 vorhandene Monokameramodul (ebenfalls nicht dargestellt) erkennt, dass Fahrzeug 21 in Tunnel 23 einfährt. Diese Information wird bei der Auswertung der empfangenen Positions- und Zeitsignale berücksichtigt. Die Standortbestimmungseinrichtung geht daher davon aus, dass die Signalqualität der zur Verfügung stehenden Positions- und Zeitsignale bei Erreichen von Tunnel 23 stark abnimmt, bzw. dass die Signale nicht mehr erfassbar sind. Dementsprechend wird der aus der Auswertung der Positions-und Zeitsignale hervorgehenden Standortgenauigkeit weniger Zuverlässigkeit beigemessen. Im Falle eines völligen Unterbrechung der Signalverbindung von Satelliten 24, 25, 26 und 27 wird aufgrund der Information, dass Fahrzeug 21 sich in Tunnel 23 befindet, nicht von einem Fehler der Standortbestimmungseinrichtung ausgegangen.

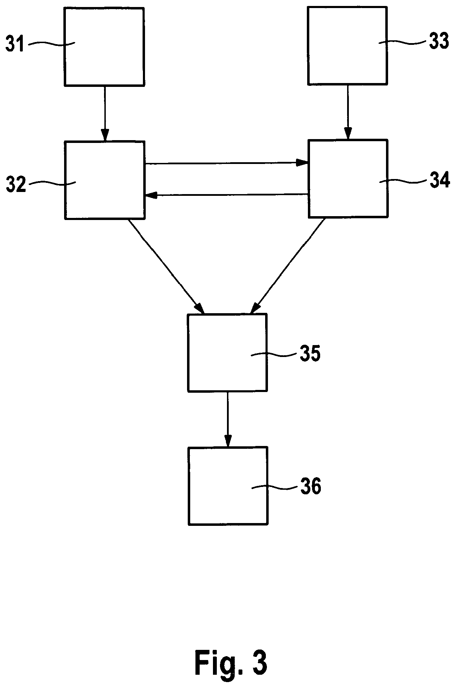

In Fig. 3 ist ein beispielhafter Ablauf des erfindungsgemäßen Verfahrens in Form eines Flussdiagramms zu sehen. Zunächst werden in Schritt 31 mittels einer Empfangsvorrichtung Positions- und Zeitsignale einer Vielzahl von einem globalen Navigationssystem zugeordneten Satelliten empfangen. Gleichzeitig werden in Schritt 33 Bildinformationen mittels einer optischen Sensoreinheit erfasst. In Verfahrensschritt 32 werden von einem Standorterrechnungsalgorithmus Standortinformationen aus den in Schritt 31 empfangenen Positions- und Zeitsignalen errechnet. In Schritt 34 werden parallel dazu von einem Bildverarbeitungsalgorithmus die in Schritt 32 erfassten Bildinformationen verarbeitet. Zudem findet in den Schritten 32 und 34 ein Informationsaustausch zwischen dem Bildverarbeitungsalgorithmus und dem Standorterrechnungsalgorithmus untereinander statt, bei dem zeitliche Ableitungen der Standortinformationen zur Verbesserung der Bildverarbeitung genutzt werden und verarbeitete Bildinformationen zur Verbesserung der Standorterrechnung genutzt werden. In Schritt 35 werden die Standortinformationen und die verarbeiteten Bildinformationen fusioniert und in Schritt 36 werden die fusionierten Standort- und Bildinformationen über die gemeinsame Anbindung an den Fahrzeugdatenbus an weitere Fahrerassistenzsysteme und Fahrzeugsysteme übertragen.

## Patentansprüche

1. Standortbestimmungseinrichtung (101) in einem Kraftfahrzeug,
umfassend mindestens eine Empfangsvorrichtung (102) zum Empfang von Positions- und Zeitsignalen einer Vielzahl von einem globalen Navigationssystem zugeordneten Satelliten und
ein Standorterrechnungsmodul (104) zum Errechnen von Standortinformationen anhand von empfangenen Positions-und Zeitdaten,
wobei die mindestens eine Empfangsvorrichtung (102) baulich in die Einhausung (114) einer optischen Sensoreinheit (106) integriert ist,
wobei die Einhausung (114) in einem Fahrgastraum in einem Bereich einer oberen Begrenzung einer Windschutzscheibe angeordnet ist und
wobei die Einhausung (114) nicht mehr als eine einzelne Anbindung (113) an jede vorhandene Fahrzeugdatenbusgattung und nicht mehr als eine einzelne Anbindung (115) an eine Fahrzeugenergieversorgung aufweist
**dadurch gekennzeichnet,**
**dass** die Standortbestimmungseinrichtung (101) derart ausgebildet ist, dass sie Bildinformationen der optischen Sensoreinheit (106) zur Bestimmung vorherrschender Empfangsbedingungen der Positions- und Zeitdaten verwendet und insbesondere eine Verarbeitung der Positions- und Zeitdaten an die vorherrschenden Empfangsbedingungen anpasst.

2. Einrichtung nach Anspruch 1,
**dadurch gekennzeichnet,**
**dass** zusätzlich das Standorterrechnungsmodul (104) baulich in die Einhausung integriert ist.

3. Einrichtung nach Anspruch 2,
**dadurch gekennzeichnet,**
**dass** das Standorterrechnungsmodul (104) mit einem Bildverarbeitungsmodul (104) der optischen Sensoreinheit (106) auf Datenebene gekoppelt ist, wobei insbesondere das Standorterrechnungsmodul (104) und das Bildverarbeitungsmodul (104) zu einem gemeinsamen elektronischen Rechenmodul (104) fusioniert sind.

4. Einrichtung nach mindestens einem der Ansprüche 1 bis 3,
**dadurch gekennzeichnet,**
**dass** die optische Sensoreinheit (106) ein an sich bekanntes Mono- oder Stereokameramodul (106) oder ein Laserscanner ist und insbesondere Bestandteil eines an sich bekannten Fahrerassistenzsystems ist.

5. Einrichtung nach mindestens einem der Ansprüche 1 bis 4,
**dadurch gekennzeichnet,**
**dass** die Standortbestimmungseinrichtung (102) ein GPS-Modul, Galileo-Modul, GLONASS-Modul, Compass-Modul oder SBAS-Modul ist.

6. Einrichtung nach mindestens einem der Ansprüche 1 bis 5,
**dadurch gekennzeichnet,**
**dass** die Windschutzscheibe im Bereich der optischen Sensoreinheit (106) nicht metallisiert ist und insbesondere im Bereich der Empfangsvorrichtung nicht metallisiert ist.

7. Einrichtung nach mindestens einem der Ansprüche 1 bis 6,
**dadurch gekennzeichnet,**
**dass** die optische Sensoreinheit (106) über mindestens einen Streulichtschutz (110, 111) verfügt und insbesondere die mindestens eine Empfangsvorrichtung (102) baulich in den Streulichtschutz (110, 111) integriert ist.

8. Einrichtung nach mindestens einem der Ansprüche 1 bis 7,
**dadurch gekennzeichnet,**
**dass** die mindestens eine Empfangsvorrichtung (102) in einen Verbindungsstrang (109) von zwei das Stereokameramodul (106) bildenden Monokameramodulen (107, 108) baulich integriert ist.

9. Informationsfusionsverfahren für eine Standortbestimmungseinrichtung in einem Kraftfahrzeug,
insbesondere für eine Standortbestimmungseinrichtung nach mindestens einem der Ansprüche 1 bis 8,
- bei welchem mittels mindestens einer Empfangsvorrichtung Positions- und Zeitsignale von einer Vielzahl von einem globalen Navigationssystem zugeordneten Satelliten empfangen werden (31),
- wobei Standortinformationen anhand von empfangenen Positions- und Zeitdaten mittels eines Standorterrechnungsalgorithmus errechnet werden (32),
- bei welchem weiterhin Bildinformationen und/oder Abstandsinformationen mittels einer optischen Sensoreinheit erfasst werden (33) und
- wobei die Bildinformationen und/oder Abstandsinformationen mittels eines Bildverarbeitungsalgorithmus verarbeitet werden (34),
- wobei zumindest die mindestens eine Empfangsvorrichtung (102) und die optische Sensoreinheit (106) mittels einer gemeinsamen Anbindung (113) an einen Fahrzeugdatenbus und einer gemeinsamen (115) Anbindung an eine Fahrzeugenergieversorgung angeschlossen sind,
**dadurch gekennzeichnet,**
- **dass** die verarbeiteten Bildinformationen zur Bestimmung vorherrschender Empfangsbedingungen der Positions- und Zeitsignale verwendet werden und insbesondere eine Verarbeitung der Positions- und Zeitsignale an die vorherrschenden Empfangsbedingungen angepasst wird.

10. Verfahren nach Anspruch 9,
**dadurch gekennzeichnet,**
**dass** zusätzlich ein Standorterrechnungsmodul (104) der Standortbestimmungseinrichtung (101), welches den Standorterrechnungsalgorithmus ausführt, mittels der gemeinsamen Anbindung (115) an den Fahrzeugdatenbus und der gemeinsamen Anbindung (113) an die Fahrzeugenergieversorgung angeschlossen ist.

11. Verfahren nach Anspruch 10,
**dadurch gekennzeichnet,**
**dass** der Bildverarbeitungsalgorithmus und der Standorterrechnungsalgorithmus von einem gemeinsamen elektronischen Rechenmodul (104) ausgeführt werden, wobei insbesondere das Standorterrechnungsmodul (104) und ein Bildverarbeitungsmodul (104) der optischen Sensoreinheit (106), welches den Bildverarbeitungsalgorithmus ausführt, zu dem gemeinsamen elektronischen Rechenmodul (104) fusioniert sind.

12. Verfahren nach mindestens einem der Ansprüche 9 bis 11,
**dadurch gekennzeichnet,**
**dass** vom Standorterrechnungsalgorithmus errechnete Standortinformationen, insbesondere zeitliche Ableitungen davon, zur Verbesserung einer Verarbeitung der Bildinformationen mittels des Bildverarbeitungsalgorithmus verwendet werden.

13. Verfahren nach Anspruch 12,
**dadurch gekennzeichnet,**
**dass** zusätzlich Fahrdynamiksensorinformationen zur Verbesserung einer Verarbeitung der Bildinformationen mittels des Bildverarbeitungsalgorithmus verwendet werden.

14. Verfahren nach mindestens einem der Ansprüche 9 bis 13,
**dadurch gekennzeichnet,**
**dass** die Standortinformationen mittels verarbeiteten Bildinformationen validiert und/oder korrigiert werden.

## Claims

1. A location determination apparatus (101) in a motor vehicle, comprising at least one receiving device (102) for receiving position and time signals from a plurality of satellites assigned to a global navigation system and
a location calculation module (104) for calculating location information on the basis of received position and time data, wherein the at least one receiving device (102) is structurally integrated in the housing (114) of an optical sensor unit (106), wherein the housing (114) is arranged in a passenger space in an area of an upper delimitation of a windscreen panel and
wherein the housing (114) features not more than one single connection (113) to each available vehicle data type and not more than one single connection (115) to a vehicle energy supply,
**characterized in that**
the location determination apparatus (101) is designed in such a manner that it uses image information from the optical sensor unit (106) to determine existing reception conditions of the position and time data, and in particular adapts a processing of the position and time data to the existing reception conditions.

2. The apparatus according to Claim 1,
**characterized in that**
in addition, the location calculation module (104) is structurally integrated into the housing.

3. The apparatus according to Claim 2,
**characterized in that**
the location calculation module (104) is coupled with an image processing module (104) of the optical sensor unit (106) at the data level, wherein in particular, the location calculation module (104) and the image processing module (104) are consolidated to become a shared electronic computing module (104).

4. The apparatus according to at least one of Claims 1 to 3, **characterized in that**
the optical sensor unit (106) is a mono or stereo camera module (106) which is already known per se or a laser scanner, and is in particular a constituent part of a driver assistance system which is already known per se.

5. The apparatus according to at least one of Claims 1 to 4, **characterized in that**
the location determination apparatus (102) is a GPS module, a Galileo module, a GLCNASS module, a Compass module or an SBAS module.

6. The apparatus according to at least one of Claims 1 to 5, **characterized in that**
the windscreen pane is not metallized in the area of the optical sensor unit (106) and in particular in the area of the receiving device.

7. The apparatus according to at least one of Claims 1 to 6, **characterized in that**
the optical sensor unit (106) has at least one flare protection (110, 111) and the at least one receiving device (102)in particular is structurally integrated into the flare protection (110, 111).

8. The apparatus according to at least one of Claims 1 to 7 **characterized in that**
the at least one receiving device (102) is structurally integrated into a connection cord (109) of two mono camera modules (107, 108) which form the stereo camera module (106).

9. An information consolidation method for a location determination apparatus in a motor vehicle,
in particular for a location determination apparatus according to at least one of Claims 1 to 8,
- in which by means of at least one receiving device, position and time signals of a plurality of satellites assigned to a global navigation system are received (31),
- wherein location information is calculated on the basis of received position and time data by means of a location calculation algorithm (32),
- in which image information and/or distance information continues to be recorded by means of an optical sensor unit (33) and
- wherein the image information and/or distance information is processed by means of an image processing algorithm (34),
- wherein at least the at least one receiving device (102) and the optical sensor unit (106) are connected via a shared connection (113) to a vehicle data bus and by means of a shared connection (115) to a vehicle energy supply,
**characterized in that**
- the processed image information to determine existing reception conditions of the position and time signals is used, and in particular, a processing of the position and time signals is adapted to the existing reception conditions.

10. The method according to Claim 9,
**characterized in that**
in addition, a location calculation module (104) of the location determination apparatus (101), which executes the location calculation algorithm, is connected by means of the shared connection (115) to the vehicle data bus and by means of the shared connection (113) to the vehicle energy supply.

11. The method according to Claim 10,
**characterized in that**
the image processing algorithm and the location calculation algorithm are executed by a shared electronic computing module (104), wherein in particular, the location calculation module (104) and an image processing module (104) of the optical sensor unit (106), which executes the image processing algorithm, are consolidated to form the shared electronic computing module (104).

12. The method according to at least one of Claims 9 to 11, **characterized in that**
location information calculated by the location calculation algorithm, in particular time deviations of said information, is used to improve a processing of the image information by means of the image processing algorithm.

13. The method according to Claim 12,
**characterized in that**
in addition, driving dynamic sensor information is used to improve a processing of the image information by means of the image processing algorithm.

14. The method according to at least one of Claims 9 to 13, **characterized in that**
the location information is validated and/or corrected by means of processed image information.

## Revendications

1. Appareil de détermination de position (101) dans un véhicule automobile,
comprenant au moins un dispositif de réception (102) pour la réception de signaux de position et temporels d'une multiplicité de satellites attribués à un système global de navigation et
un module de calcul de position (104) pour le calcul d'informations de position à l'aide de données de positions et temporelles reçues, l'au moins un dispositif de réception (102) étant intégré par construction dans le boîtier (114) d'une unité de capteur optique (106),
le boîtier (114) étant disposé dans un habitacle de véhicule dans une zone d'une limite supérieure d'un pare-brise et
le boîtier (114) ne présentant pas plus d'un raccordement unique (113) à chaque type de bus de données de véhicule existant et pas plus d'un raccordement unique (115) à une alimentation en énergie de véhicule,
**caractérisé en ce que**
l'appareil de détermination de position (101) est formé de telle sorte qu'il utilise des informations d'images de l'unité de capteur optique (106) pour la détermination de conditions de réception dominantes des données de position et temporelles et, en particulier, qu'il ajuste un traitement des données de position et temporelles aux conditions de réception dominantes.

2. Appareil selon la revendication 1,
**caractérisé en ce que**,
en outre, le module de calcul de position (104) est intégré par construction au boîtier.

3. Appareil selon la revendication 2,
**caractérisé en ce que**
le module de calcul de position (104) est couplé à un module de traitement des images (104) de l'unité de capteur optique (106) au niveau des données, le module de calcul de position (104) et le module de traitement des images (104) étant en particulier fusionnés en un module de calcul électronique (104) commun.

4. Appareil selon au moins l'une des revendications 1 à 3, **caractérisé en ce que**
l'unité de capteur optique (106) est un module de caméra mono ou stéréo (106) en soi connu ou un scanner laser et, en particulier, est un élément faisant partie d'un système d'assistance au conducteur en soi connu.

5. Appareil selon au moins l'une des revendications 1 à 4, **caractérisé en ce que**
l'appareil de détermination de position (102) est un module GPS, un module Galileo, un module GLONASS, un module Compass ou un module SBAS.

6. Appareil selon au moins l'une des revendications 1 à 5, **caractérisé en ce que**
le pare-brise n'est pas métallisé dans la zone de l'unité de capteur optique (106) et, en particulier, n'est pas métallisé dans la zone du dispositif de réception.

7. Appareil selon au moins l'une des revendications 1 à 6, **caractérisé en ce que**
l'unité de capteur optique (106) dispose d'au moins une protection contre la lumière parasite (110, 111) et, en particulier, **en ce que** l'au moins un dispositif de réception (102) est intégré par construction dans la protection contre la lumière parasite (110, 111).

8. Appareil selon au moins l'une des revendications 1 à 7, **caractérisé en ce que**
l'au moins un dispositif de réception (102) est intégré par construction à un élément de raccordement (109) de deux modules de caméra mono (107, 108) formant le module de caméra stéréo (106).

9. Procédé de fusion d'informations pour un appareil de détermination de position dans un véhicule automobile,
en particulier pour un appareil de détermination de position selon au moins une des revendications 1 à 8,
- des signaux de position et temporels d'une multiplicité de satellites attribués à un système global de navigation étant reçus au moyen d'au moins un dispositif de réception (31),
- des informations de position étant calculées à l'aide de données de position et temporelles reçues au moyen d'un algorithme de calcul de position (32),
- par lequel des informations d'images et/ou des informations de distance sont enregistrées au moyen d'une unité de capteur optique (33), et
- les informations d'images et/ou les informations de distance étant traitées au moyen d'un algorithme de traitement des images (34),
- l'au moins un dispositif de réception (102) et l'unité de capteur optique (106) étant au moins raccordés à un bus de données de véhicule au moyen d'un raccordement commun (113) et à une alimentation en énergie de véhicule au moyen d'un raccordement commun (115),
**caractérisé en ce que**
- les informations d'images traitées sont utilisées pour la détermination de conditions de réception dominantes des données de position et temporelles et, en particulier, **en ce qu'**un traitement des signaux de position et temporels est adapté aux conditions de réception dominantes.

10. Procédé selon la revendication 9,
**caractérisé en ce qu'**
un module de calcul de position (104) de l'appareil de détermination de position (101), lequel exécute l'algorithme de calcul de position est, en outre, raccordé au bus de données de véhicule au moyen du raccordement commun (115) et à l'alimentation en énergie de véhicule au moyen du raccordement commun (113).

11. Procédé selon la revendication 10,
**caractérisé en ce que**
l'algorithme de traitement des images et l'algorithme de calcul de position sont exécutés par un module de calcul électronique commun (104), le module de calcul de position (104) et un module de traitement des images (104) de l'unité de capteur optique (106), lequel exécute l'algorithme de traitement des images, étant, en particulier, fusionnés dans le module de calcul électronique commun (104).

12. Procédé selon au moins l'une des revendications 9 à 11, **caractérisé en ce que**
les informations de position calculées par l'algorithme de calcul de position, en particulier leurs dérivées temporelles, sont utilisées pour l'amélioration d'un traitement des informations d'images au moyen de l'algorithme de traitement des images.

13. Procédé selon la revendication 12,
**caractérisé en ce que**
des informations de capteur de dynamique de conduite sont utilisées en outre pour l'amélioration d'un traitement des informations d'images au moyen de l'algorithme de traitement des images.

14. Procédé selon au moins l'une des revendications 9 à 13, **caractérisé en ce que**
les informations de position sont validées et/ou corrigées au moyen d'informations d'images traitées.
